# EUROPEAN PATENT APPLICATION

(11) **EP 4 667 791 A1**
(43) Date of publication of application: **24.12.2025**
(21) Application number: 24756740.7
(22) Date of filing: 06.02.2024
(51) Int. Cl.: F16J 15/34

(54) **MECHANICAL SEAL**

(30) Priority: 13.02.2023 JP 2023019829
(71) Applicant: Eagle Industry Co., Ltd., Minato-ku Tokyo 105-8587 (JP)
(72) Inventor: IMURA, Tadatsugu, Tokyo 105-8587 (JP)
(74) Representative: WSL Patentanwälte Partnerschaft mbB
(86) International application number: PCT/JP2024/003894
(87) International publication number: WO 2024/171891

(57) **Abstract**

Sliding components capable of reducing a leakage amount of a sealed fluid and separating sliding surfaces from each other in a well-balanced manner are provided. At least one sliding surface 11 of seal rings 10 and 20 is provided with a supply hole 10b which supplies a barrier fluid G between the sliding surfaces 11 and 21, the sliding surface 21 is provided with an introduction groove 23 which is formed to overlap with the supply hole 10b in an axial view and extend in a circumferential direction, and a bypass groove 25 having both circumferential ends 252 and 253 extending toward the introduction groove 23 is formed on a leakage side S2 of the introduction groove 23.

## Description

### {TECHNICAL FIELD}

The present invention relates to a mechanical seal, for example, a mechanical seal including sliding components that rotate relative to each other and particularly used for a shaft sealing device sealing a rotating shaft of a rotating machine in an automotive seal field, a general industrial machinery seal field, or another seal field.

### {BACKGROUND ART}

As a shaft sealing device that prevents the leakage of a sealed fluid, for example, a mechanical seal includes a pair of annular sliding components that rotate relative to each other and have sliding surfaces sliding against each other. In such a mechanical seal, there has been a demand in recent years for the purpose of environmental protection and the like to reduce the energy lost due to sliding.

For example, in a mechanical seal shown in Patent Citation 1, a fluid supply passage is formed in a stationary seal ring for communication between a seal surface and an external fluid supply source. Further, a rotary seal ring is provided with a fluid guide groove into which a gas such as a nitrogen gas is introduced from the fluid supply passage and which extends in the circumferential direction, a plurality of dynamic pressure generation grooves which extend from the fluid guide groove toward a high pressure side, and a plurality of dynamic pressure generation grooves which extend from the fluid guide groove toward a low pressure side.

When a gas is supplied from the fluid supply source, the gas flows into the fluid guide groove and is evenly distributed at a static pressure in the circumferential direction and the radial direction between the relative sliding surfaces by the dynamic pressure generation grooves on the high pressure side and the low pressure side, and the sliding surfaces can be separated from each other by the static pressure. Further, since a dynamic pressure is generated in each dynamic pressure generation groove in addition to the static pressure during relative rotation, the sliding surfaces can be further separated from each other and the friction generated during relative rotation can be effectively reduced.

### {CITATION LIST}

### {Patent Literature}

Patent Citation 1: JP 2006-022834 A (Page 6, FIG. 3)

### {SUMMARY OF INVENTION}

### {Technical Problem}

In the mechanical seal of Patent Citation 1, although the dynamic pressure generation grooves on the high pressure side and the low pressure side generate the static pressure and the dynamic pressure substantially evenly in the circumferential direction and the radial direction between the relative sliding surfaces to separate the sliding surfaces from each other in a well-balanced manner, the gas is likely to leak from the dynamic pressure generation groove on the low pressure side toward the low pressure side. Therefore, there is concern that a sealed fluid on the high pressure side may leak into a low pressure side space together with the gas leaking between the sliding surfaces from the dynamic pressure generation groove on the low pressure side.

The present invention has been made in view of such problems and an object thereof is to provide sliding components capable of reducing a leakage amount of a sealed fluid and separating sliding surfaces from each other in a well-balanced manner.

### {Solution to Problem}

In order to solve the above-described problems, a mechanical seal according to the present invention is a mechanical seal disposed between a housing and a rotating shaft rotating relative to the housing, comprising a stationary seal ring fixed to a housing side and a rotary seal ring fixed to a rotating shaft side, and defining a sealed fluid space and a leakage space by relative rotation of the stationary seal ring and the rotary seal ring, wherein at least one sliding surface of the stationary seal ring and the rotary seal ring is provided with a supply hole which supplies a barrier fluid between the sliding surfaces and at least one sliding surface of the stationary seal ring and the rotary seal ring is provided with an introduction groove which is formed to overlap with the supply hole in an axial view and extend in a circumferential direction, and wherein a bypass groove having both circumferential ends extending toward the introduction groove is formed on a leakage side of the introduction groove. According to the feature of the present invention, since the fluid on the leakage side of the introduction groove is recovered by the bypass groove extending from the leakage side toward the introduction groove, the leakage amount of the sealed fluid is small and the sliding surfaces can be separated from each other in a well-balanced manner.

It may be preferable that the bypass groove has inclined portions at both ends in the circumferential direction, the inclined portion on an upstream side in relative rotation direction is inclined toward the upstream side in the relative rotation direction toward the introduction groove, and the inclined portion on a downstream side in the relative rotation direction is inclined toward the downstream side in the relative rotation direction toward the introduction groove. According to this preferable configuration, the barrier fluid can be easily introduced and discharged between the bypass groove and the introduction groove. Further, since a positive pressure is generated at the leakage side end of the upstream inclined portion and a negative pressure is generated at the downstream inclined portion, it is easy to recover the fluid leaking to the leakage side while also lifting the leakage side in a well-balanced manner.

It may be preferable that a circumferential portion which extends in the circumferential direction is be provided between the upstream inclined portion and the downstream inclined portion. According to this preferable configuration, since the circumferential portion extending in the circumferential direction is a negative pressure generation portion, it is easier to recover the fluid that flows out to the leakage side from the introduction groove during relative rotation of the pair of sliding rings.

It may be preferable that the both ends of the bypass groove communicate with the introduction groove. According to this preferable configuration, the sliding surfaces can be separated from each other by introducing a barrier fluid from the introduction groove into the bypass groove even when the pair of sliding rings rotate relative to each other and stop.

It may be preferable that a branch groove extends from the introduction groove to a sealed fluid side. According to this preferable configuration, since a pressure is generated in a well-balanced manner in the radial direction, the sliding surfaces can be stably separated from each other.

It may be preferable that the branch groove has a dynamic pressure generation portion which extends in a relative rotation direction of the stationary seal ring and the rotary seal ring. According to this preferable configuration, a lift force between the sliding surfaces is improved by the dynamic pressure generated during relative rotation in addition to the static pressure of the barrier fluid. Further, since a large amount of barrier fluid can be discharged to the sealed fluid side, the leakage of the sealed fluid into the leakage side space can be suppressed.

It may be preferable that the branch groove is disposed between the both ends of the bypass groove. According to this preferable configuration, since the bypass groove and the branch groove are provided at an overlapping position in the radial direction, the sliding surfaces can be more stably separated from each other.

It may be preferable that the introduction groove has an endless annular shape. According to this preferable configuration, since a pressure is generated in a well-balanced manner in the circumferential direction, the sliding surfaces can be stably separated from each other. Further, a dynamic pressure is less likely to be generated locally in the circumferential direction of the introduction groove during rotation.

### {BRIEF DESCRIPTION OF DRAWINGS}

FIG. 1 is a longitudinal sectional view showing an example of a mechanical seal according to a first embodiment of the present invention.
FIG. 2 is a view showing a sliding surface of a rotary seal ring in the first embodiment as viewed from an axial direction.
FIG. 3 is a partially enlarged view of FIG. 2.
FIG. 4A is a cross-sectional view taken along line A-A and FIG. 4B is a cross-sectional view taken along line B-B.
FIG. 5A is a schematic view showing the state of static pressure acting on the sliding surface in the first embodiment and FIG. 5B is a schematic view showing the state of dynamic pressure acting on the sliding surface.
FIG. 6 is a view showing a sliding surface of a rotary seal ring of a mechanical seal according to a second embodiment of the present invention as viewed from an axial direction.
FIG. 7 is a partially enlarged view of FIG. 6.
FIG. 8A is a cross-sectional view taken along line C-C and FIG. 8B is a cross-sectional view taken along line D-D.
FIG. 9A is a schematic view showing the state of static pressure acting on the sliding surface in the second embodiment and FIG. 9B is a schematic view showing the state of dynamic pressure acting on the sliding surface.
FIG. 10 is a view showing an introduction groove and a branch groove of a mechanical seal according to a third embodiment of the present invention as viewed from an axial direction.
FIG. 11 is a view showing an introduction groove and a branch groove of a mechanical seal according to a fourth embodiment of the present invention as viewed from an axial direction.
FIG. 12 is a view showing an introduction groove and a branch groove of a mechanical seal according to a fifth embodiment of the present invention as viewed from an axial direction.
FIG. 13 is a view showing an introduction groove and a branch groove of a mechanical seal according to a sixth embodiment of the present invention as viewed from an axial direction.
FIG. 14 is a view showing an introduction groove and a branch groove of a mechanical seal according to a seventh embodiment of the present invention as viewed from an axial direction.

### {DESCRIPTION OF EMBODIMENTS}

Modes for carrying out a mechanical seal according to the present invention will be described below based on embodiments.

### {First embodiment}

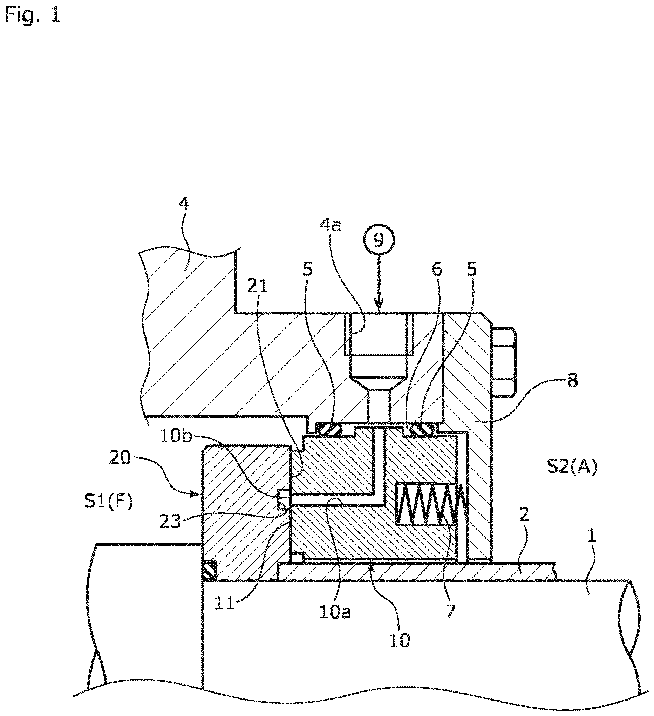

A mechanical seal according to a first embodiment of the present invention will be described with reference to FIGS. 1 to 5.

A mechanical seal shown in FIG. 1 is of an inside type that seals a sealed fluid F that tends to leak from an outer radial side to an inner radial side of a sliding surface.

Specifically, the sealed fluid F exists in an outer space S1 of the mechanical seal, and an atmosphere A exists in an inner space S2. In this embodiment, the outer radial side of the sliding components constituting the mechanical seal will be described as a sealed fluid space side (high pressure side), and the inner radial side thereof will be described as a leakage space side (low pressure side). Further, for convenience of description, grooves and the like formed on the sliding surface may be indicated by dots in the drawings.

The mechanical seal mainly includes a stationary seal ring 10 which serves as the other annular sliding ring and a rotary seal ring 20 which serves as one annular sliding ring. The rotary seal ring 20 is provided on a rotating shaft 1 to be rotatable together with the rotating shaft 1 via a sleeve 2. The stationary seal ring 10 is provided on an inner radial side of a housing 4 of an attachment target device not to be rotatable, but movable in the axial direction.

Two O-rings 5 are arranged between the housing 4 and the stationary seal ring 10 to be separated from each other in the axial direction. The housing 4 is provided with a through-hole 4a that penetrates in the radial direction. An inner radial opening of the through-hole 4a communicates with a space 6 defined by the housing 4, the stationary seal ring 10, and two O-rings 5, and an outer radial opening of the through-hole 4a communicates with a static pressure gas supply source 9 disposed outside. Further, a cover 8 which is disposed on the side opposite to the rotary seal ring 20 in the stationary seal ring 10 is fixed to the housing 4.

An elastic member 7 is disposed between the cover 8 and the stationary seal ring 10. The stationary seal ring 10 is biased in the axial direction by the elastic member 7, and a sliding surface 11 of the stationary seal ring 10 and a sliding surface 21 of the rotary seal ring 20 are adapted to slide closely against each other.

Further, the stationary seal ring 10 has a plurality of passages 10a formed in the circumferential direction to extend from the outer peripheral surface to the sliding surface 11. In the passage 10a, one end side opening communicates with the space 6, and a supply hole 10b serving as the other end side opening communicates with an introduction groove 23 to be described later in the rotary seal ring 20. Furthermore, the sliding surface 11 of the stationary seal ring 10 is formed as a flat surface except for the supply hole 10b.

The stationary seal ring 10 and the rotary seal ring 20 are typically made of SiC (as an example of hard material) or a combination of SiC and carbon (as an example of soft material), but are not limited thereto, and any sliding material that is used as a sliding material for mechanical seals can be used. Furthermore, examples of SiC include sintered bodies using boron, aluminum, carbon, and the like as sintering aids, as well as materials consisting of two or more phases with different components and compositions, such as SiC with dispersed graphite particles, reaction sintered SiC consisting of SiC and Si, SiC-TiC, and SiC-TiN. Examples of carbon include a mixture of carbonaceous and graphite, resin-molded carbon, and sintered carbon. Further, in addition to the above-described sliding materials, metal materials, resin materials, surface-modifying materials (e.g., coating materials), composite materials, and the like can also be used.

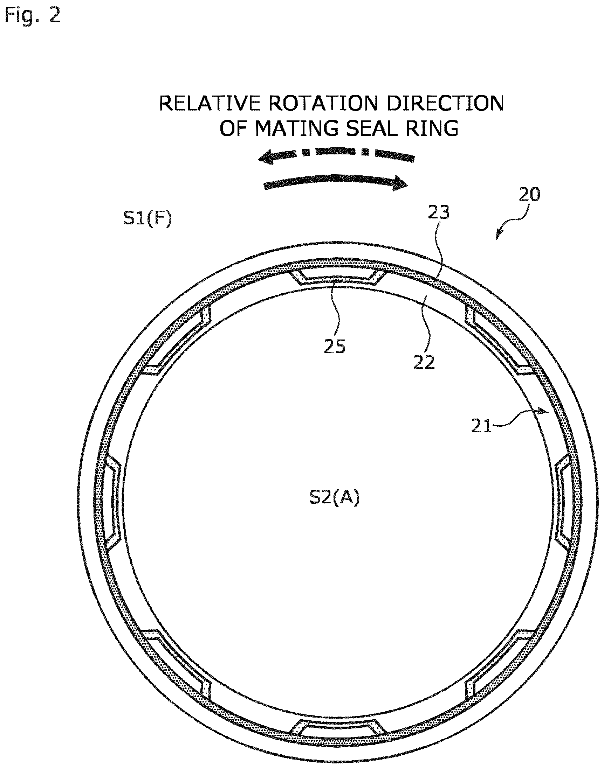

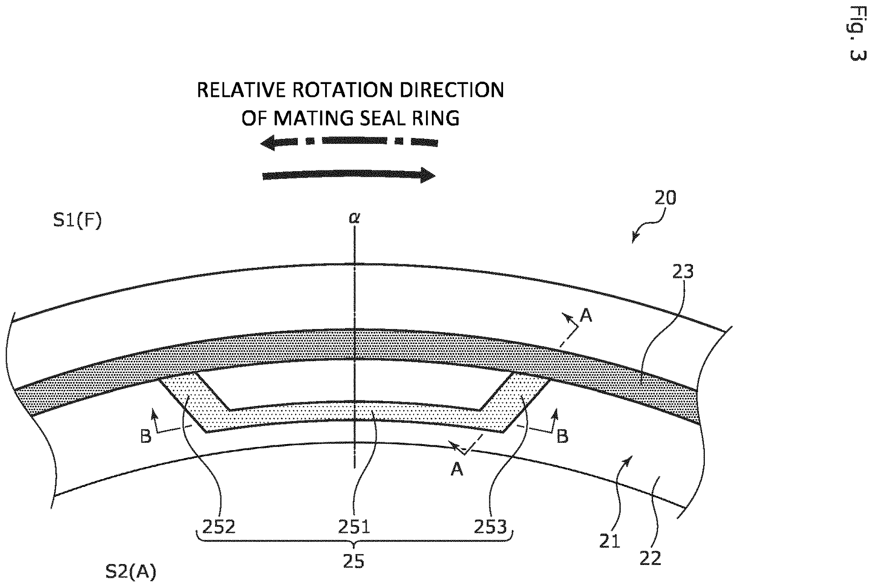

As shown in FIGS. 2 and 3, the rotary seal ring 20 is slidable clockwise and counterclockwise relative to the stationary seal ring 10 which is a mating seal ring. The solid and dashed arrows in FIGS. 2 and 3 indicate the relative rotation direction of the stationary seal ring 10 relative to the rotary seal ring 20. In the following description, the direction of the solid arrow in FIGS. 2 and 3 may be referred to as the normal rotation direction, and the direction of the dashed arrow may be referred to as the reverse rotation direction.

The sliding surface 21 of the rotary seal ring 20 is provided with an introduction groove 23 and a plurality of bypass grooves 25. Furthermore, the area other than the introduction groove 23 and the bypass groove 25 forms a flat land 22. Furthermore, the portion fitted to the sleeve 2 in the inner radial portion of the rotary seal ring 20 is not shown.

The introduction groove 23 is provided concentrically with the rotary seal ring 20. That is, the introduction groove 23 has an endless annular shape.

On the inner radial side of the introduction groove 23, the bypass grooves 25 are arranged at equal intervals in the circumferential direction (for example, eight in this embodiment).

The bypass groove 25 is substantially formed in a U-shape as viewed from the axial direction. Specifically, the bypass groove 25 includes a circumferential portion 251 and inclined portions 252 and 253. Further, the bypass groove 25 has a shape in which a circumferential length is longer than a radial length.

The circumferential portion 251 extends in the circumferential direction at a position spaced radially inward from the introduction groove 23. This circumferential portion 251 is substantially parallel to the introduction groove 23.

The inclined portions 252 and 253 extend from both ends of the circumferential portion 251 toward the introduction groove 23 in a direction moving away from each other. The inclined portions 252 and 253 communicate with the introduction groove 23. More specifically, the inclined portion 252 is located on the upstream side in the normal rotation direction. The inclined portion 252 has a pair of walls in the circumferential direction. The pair of walls extend linearly from the circumferential portion 251 toward the introduction groove 23 in the radial direction and from the circumferential portion 251 toward the upstream side in the normal rotation direction in the circumferential direction. That is, the inclined portion 252 extends linearly from the circumferential portion 251 toward the introduction groove 23 to be inclined toward the upstream side in the normal rotation direction. The inclined portion 253 is located on the downstream side in the normal rotation direction. The inclined portion 253 has a pair of walls in the circumferential direction. The pair of walls extend linearly from the circumferential portion 251 toward the introduction groove 23 in the radial direction and from the circumferential portion 251 toward the downstream side in the normal rotation direction in the circumferential direction. That is, the inclined portion 253 extends linearly from the circumferential portion 251 toward the introduction groove 23 to be inclined toward the downstream side in the normal rotation direction. During the reverse rotation, the inclined portions 252 and 253 are arranged such that the upstream side and the downstream side are reversed, but the inclination direction is the same even in this case. That is, the upstream inclined portion is inclined toward the upstream side, and the downstream inclined portion is inclined toward the downstream side. Furthermore, the pair of walls constituting the inclined portion 252 in the circumferential direction and the pair of walls constituting the inclined portion 253 in the circumferential direction may be other than straight, and may be, for example, curved, bowed, or bent.

This bypass groove 25 has a symmetrical shape with respect to a line α that extends in the radial direction and passes through the circumferential center of the circumferential portion 251. In the following description, the line α that extends in the radial direction will be simply referred to as a radial line α.

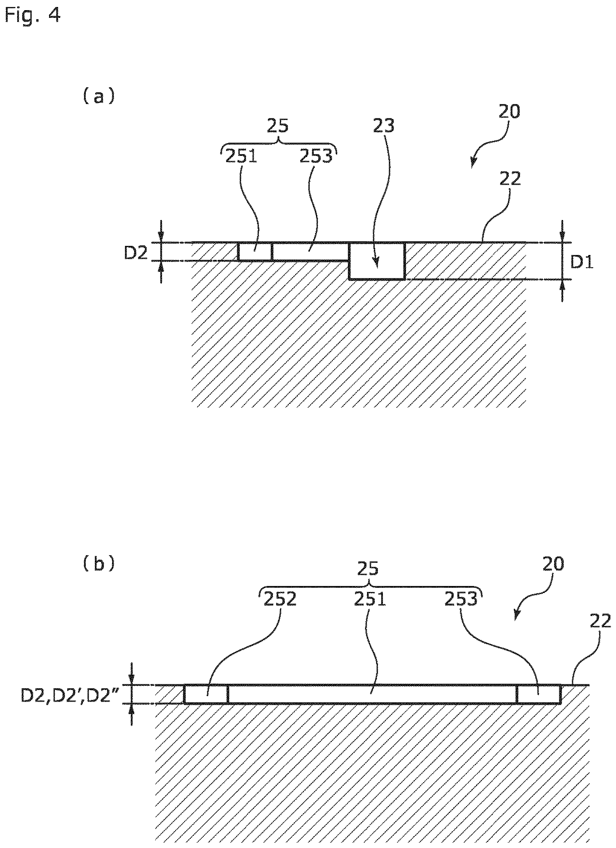

As shown in FIG. 4A, the depth D1 of the introduction groove 23 is deeper than the depth D2 of the inclined portion 253 (D1>D2). Specifically, the depth D1 is about twice the depth D2.

Further, as shown in FIG. 4B, the depth D2 of the inclined portion 253 is the same as the depth D2' of the circumferential portion 251 and the depth D2'' of the inclined portion 232 (D2=D2'=D2''). That is, the bypass groove 25 has a constant depth.

Next, the pressure acting on the sliding surface 11 of the stationary seal ring 10 and the sliding surface 21 of the rotary seal ring 20 will be described.

When a static pressure gas G which is a barrier fluid is supplied from the static pressure gas supply source 9, the static pressure gas G is introduced into the introduction groove 23 of the rotary seal ring 20 through the through-hole 4a of the housing 4, the space 6, the passage 10a of the stationary seal ring 10, and the supply hole 10b (see FIG. 1). Furthermore, the static pressure gas G is at a higher pressure than the sealed fluid F.

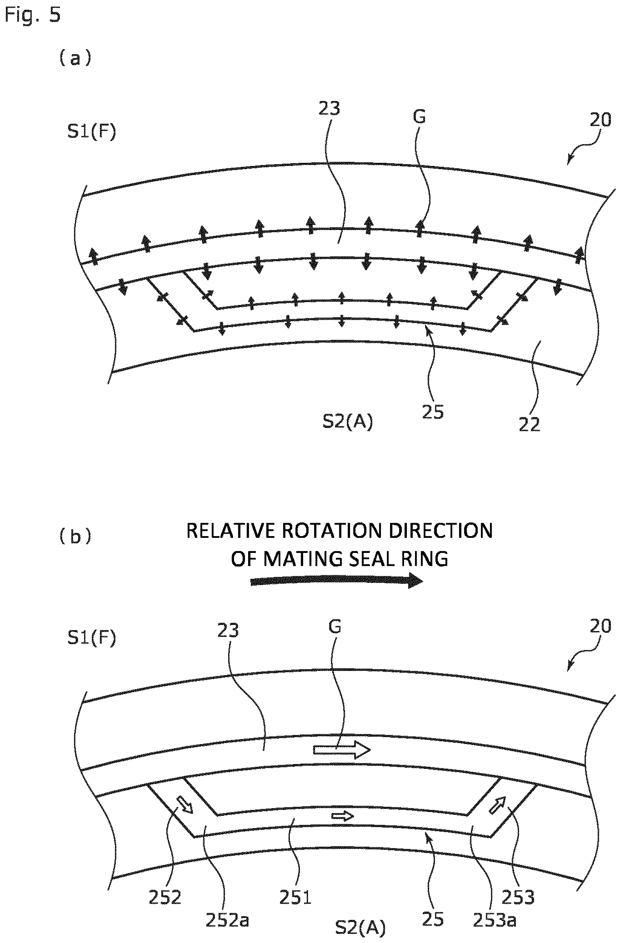

As shown in FIG. 5A, the static pressure gas G introduced into the introduction groove 23 flows into each bypass groove 25. Accordingly, the static pressure of the static pressure gas G acts on the sliding surface 11 and the sliding surface 21, and the sliding surface 11 and the sliding surface 21 are separated from each other in the axial direction. In this way, since the static pressure of the static pressure gas G acts not only on the portion of the introduction groove 23 but also on the portion of each bypass groove 25 branching off from the introduction groove 23 in the radial direction, the sliding surfaces 11 and 21 can be separated from each other in a well-balanced manner. Further, the static pressure of the static pressure gas G can suppress the sealed fluid F flowing between the sliding surfaces 11 and 21 from flowing radially inward.

Further, as shown in FIG. 5B, when the sliding surfaces 11 and 21 rotate relative to each other in the normal rotation direction, the static pressure gas G inside the introduction groove 23 and the bypass groove 25 moves in the normal rotation direction. In the bypass groove 25, the static pressure gas G flows from the introduction groove 23 into the inclined portion 252, flows through the circumferential portion 251 and the inclined portion 253 in that order, and returns to the introduction groove 23.

Since the fluid on the inner radial side of the introduction groove 23 can be recovered by the flow of the static pressure gas G inside the bypass groove 25 due to this shearing, the static pressure gas G is less likely to leak into the inner space S2. Therefore, the sealed fluid F is less likely to leak together with the static pressure gas G into the inner space S2.

Specifically, in the inclined portion 253 and the circumferential portion 251 located on the downstream side of the bypass groove 25, since the fluid in the inclined portion 253 is drawn into the flow of the static pressure gas G inside the introduction groove 23, which is the main stream, a relative negative pressure is generated. On the other hand, since the static pressure gas G inside the introduction groove 23 flows into the inclined portion 252 located on the upstream side of the bypass groove 25, the relative pressure becomes higher than that of the inclined portion 253 or the circumferential portion 251. Accordingly, in the bypass groove 25, the fluid in the vicinity of the circumferential portion 251 where a relative negative pressure is generated can be easily recovered by the circumferential portion. Furthermore, the circumferential portion 251 and the inclined portion 253 have a relatively negative pressure compared to the inclined portion 252, but the static pressure of the static pressure gas G inside the introduction groove 23 or the inclined portion 252 acts dominantly. As a result, there is almost no influence on the force separating the sliding surfaces 11 and 21 from each other.

Further, the flow of the static pressure gas G inside the bypass groove 25 is relatively faster in the circumferential portion 251 than the inclined portions 252 and 253. This is because the extension direction of the inclined portions 252 and 253 intersects with the shear force and the influence of the shear force on the inclined portions 252 and 253 is relatively smaller than that on the circumferential portion 251. Further, this is because the flow of the inclined portion 252 is obstructed by the bending point between the inclined portion 252 and the circumferential portion 251. In addition, this is because the flow of the inclined portion 253 is obstructed by the static pressure in the introduction groove 23. As a result, the flow is slower in the inclined portions 252 and 253 than in the circumferential portion 251.

Further, the inclined portion 252 of the bypass groove 25 is inclined from the circumferential portion 251 toward the introduction groove 23 in the reverse rotation direction, and the inclined portion 253 is inclined from the circumferential portion 251 toward the introduction groove 23 in the normal rotation direction. Therefore, the static pressure gas G can be easily introduced from the introduction groove 23 into the inclined portion 252, and the static pressure gas G can be easily discharged from the inclined portion 253 to the introduction groove 23 during normal rotation. Further, since a dynamic pressure is generated at a leakage side end 252a of the inclined portion 252 on the upstream side in the normal rotation direction, that is, in the vicinity of a bending point between the inclined portion 252 and the circumferential portion 251, the leakage side can also be lifted in a well-balanced manner.

Further, since the static pressure gas G returns from the inner radial side of the introduction groove 23 toward the introduction groove 23, the static pressure gas G is less likely to leak into the inner space S2.

Further, since the inclined portions 252 and 253 communicate with the introduction groove 23, the static pressure gas G can be easily introduced and discharged between the inclined portions 252 and 253 and the introduction groove 23. Further, since the static pressure gas G can be introduced from the introduction groove 23 into the bypass groove 25 even when the relative sliding between the sliding surfaces 11 and 21 is stopped, the sliding surfaces 11 and 21 can be separated from each other.

Further, since the inclined portions 252 and 253 extend linearly without any inflection point, the static pressure gas G smoothly flows inside the inclined portions 252 and 253. Therefore, a dynamic pressure is less likely to be generated in the vicinity of the inclined portions 252 and 253 during relative rotation, and the leakage of the static pressure gas G into the inner space S2 can be reduced.

Further, since the introduction groove 23 has an annular shape, a pressure is generated in a well-balanced manner in the circumferential direction, and the sliding surfaces 11 and 21 can be stably separated from each other. Further, a dynamic pressure is less likely to be generated locally in the circumferential direction of the introduction groove 23 during relative rotation.

Further, since the bypass groove 25 has a symmetrical shape with respect to the radial line α, the fluid recovery capability of the bypass groove 25 does not change depending on the rotation direction of the rotary seal ring 20. Further, during reverse rotation, a dynamic pressure can be generated at a leakage side end 253a of the inclined portion 253 on the upstream side in the reverse rotation direction, that is, in the vicinity of the bending portion between the inclined portion 253 and the circumferential portion 251.

Furthermore, in this embodiment, although the embodiment has been exemplified in which the depth D1 of the introduction groove 23 is about twice the depth D2 of the inclined portion 253, these depths can be freely changed. For example, the depth D2 may be the same as the depth D1 or deeper than the depth D1.

Further, in this embodiment, although the embodiment has been exemplified in which the bypass groove 25 has a constant depth, the depth may vary in the extension direction.

Further, in this embodiment, both ends of the circumferential portion 251 are the inclined portions 252 and 253, but both ends of the circumferential portion 251 may extend in the radial direction.

Further, in this embodiment, although the embodiment has been exemplified in which the bypass groove 25 has a symmetrical shape with respect to the radial line α, the bypass groove may have an asymmetrical shape with respect to the radial line.

### {Second embodiment}

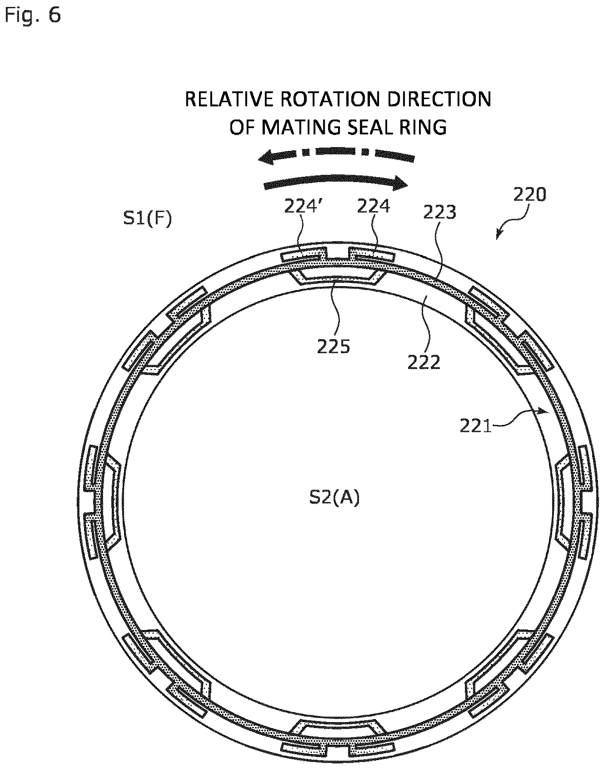

Next, a mechanical seal according to a second embodiment of the present invention will be described with reference to FIGS. 6 to 9. Furthermore, the description of configurations that are the same as and overlap with the configurations of the first embodiment will be omitted.

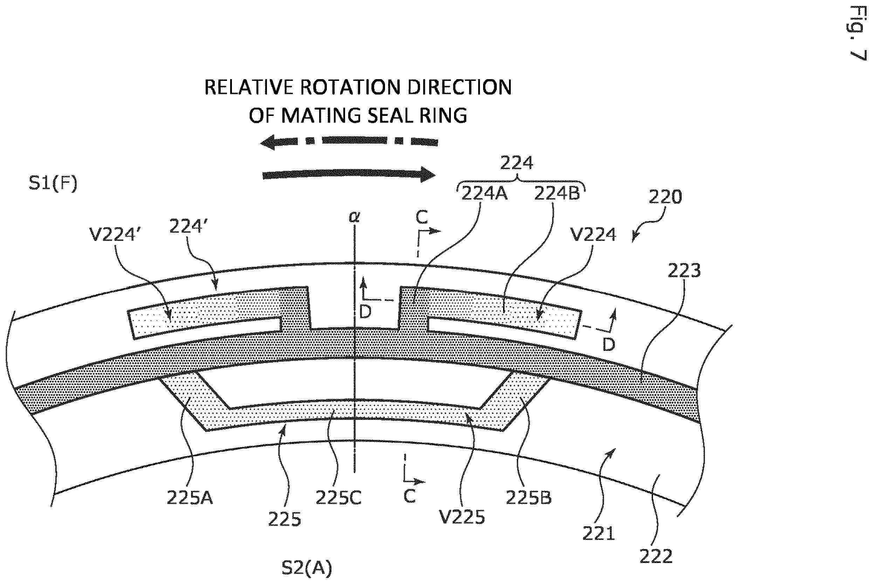

As shown in FIGS. 6 and 7, a sliding surface 221 of a rotary seal ring 220 of this second embodiment is provided with an introduction groove 223, outer radial dynamic pressure generation mechanisms 224 and 224' serving as branch grooves, and a bypass groove 225. Furthermore, the introduction groove 223 and the bypass groove 225 have the same configuration as the introduction groove 23 and the bypass groove 25 of the first embodiment.

On the outer radial side of the introduction groove 223, a set of the outer radial dynamic pressure generation mechanisms 224 and 224' are evenly arranged in the circumferential direction (for example, eight sets in this embodiment). The outer radial dynamic pressure generation mechanisms 224 and 224' are arranged between inclined portions 225A and 225B of both ends of the bypass groove 225 in the circumferential direction.

The outer radial dynamic pressure generation mechanism 224 has a so-called Rayleigh step shape and includes a radial groove 224A and a circumferential groove 224B serving as a dynamic pressure generation portion. The radial groove 224A extends radially outward from the introduction groove 223. The circumferential groove 224B extends from the outer radial end of the radial groove 224A in the normal rotation direction substantially in parallel to the introduction groove 223.

Further, the outer radial dynamic pressure generation mechanism 224' is disposed to be separated from the outer radial dynamic pressure generation mechanism 224 in the reverse rotation direction. The outer radial dynamic pressure generation mechanism 224' has a symmetrical shape to the outer radial dynamic pressure generation mechanism 224 with respect to the radial line α.

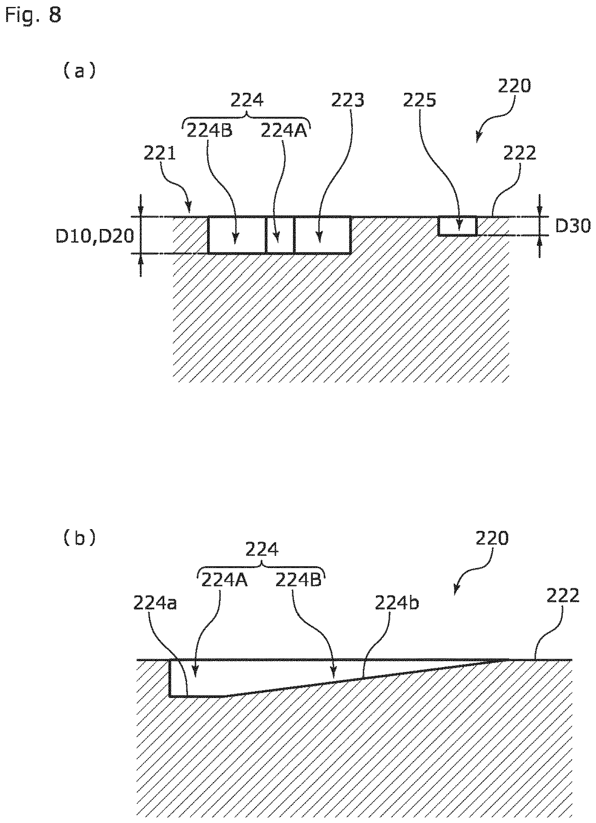

As shown in FIG. 8A, the depth D10 of the introduction groove 223 is the same as the depth D20 of the radial groove 224A of the outer radial dynamic pressure generation mechanism 224 (D10=D20).

Further, the depth D20 of the radial groove 224A is deeper than the depth D30 of the bypass groove 225 (D20>D30). Specifically, the depth D30 is about half the depth D20. Furthermore, the depth D30 can be freely changed as long as the depth is shallower than the depth D20.

As shown in FIG. 8B, a bottom surface 224b of the circumferential groove 224B is an inclined surface that gradually becomes shallower from a bottom surface 224a of the radial groove 224A toward a land 222.

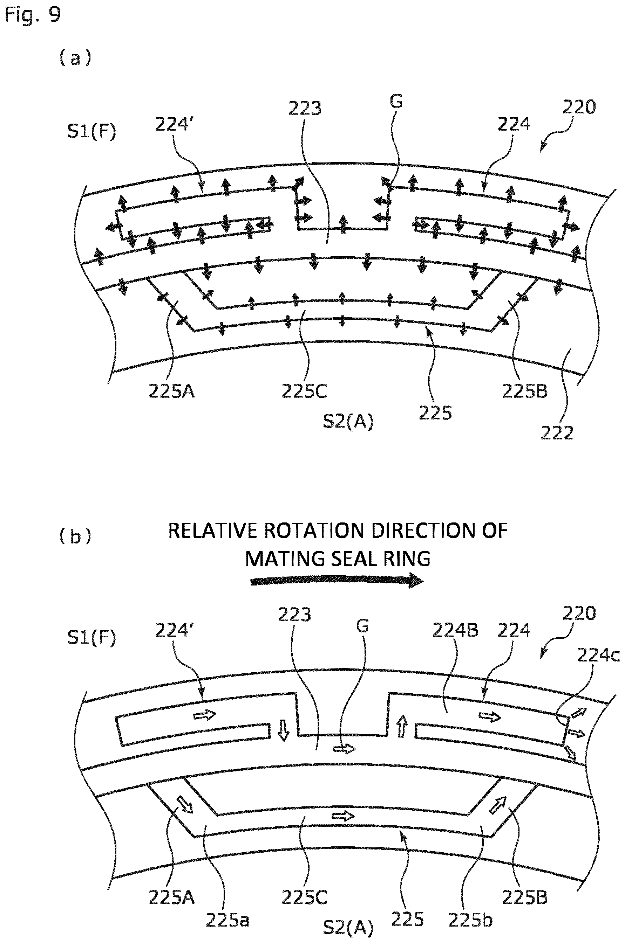

As shown in FIG. 9A, the static pressure gas G introduced into the introduction groove 223 flows into each of the outer radial dynamic pressure generation mechanisms 224 and 224' and each bypass groove 225. Accordingly, the static pressure of the static pressure gas G acts on the sliding surface 11 and the sliding surface 21, and the sliding surface 11 and the sliding surface 21 are separated from each other in the axial direction. In this way, since the static pressure of the static pressure gas G also acts on the portion of each bypass groove 225 and each of the outer radial dynamic pressure generation mechanisms 224 and 224' branching off from the introduction groove 23 in the radial direction in addition to the portion of the introduction groove 223, the sliding surfaces 11 and 21 can be separated from each other in a well-balanced manner.

Further, as shown in FIG. 9B, when the sliding surfaces 11 and 21 rotate relative to each other in the normal rotation direction, the static pressure gas G inside the introduction groove 223, the outer radial dynamic pressure generation mechanisms 224 and 224', and the bypass groove 225 moves in the normal rotation direction. Accordingly, a dynamic pressure is generated in the vicinity of an end 224c of the circumferential groove 224B and in the vicinity of a leakage side end 225a of the inclined portion 225A on the upstream side in the normal rotation direction of the bypass groove 225, that is, in the vicinity of the intersection between the inclined portion 225A and the circumferential portion 225C, and a fluid around the bypass groove 225 can be recovered. That is, since a dynamic pressure acts on both the sealed fluid side and the leakage side of the introduction groove 223 in addition to the static pressure of the static pressure gas G on the sliding surfaces 11 and 21, the sliding surfaces 11 and 21 can be further separated from each other.

Further, since the groove volumes V224 and V224' of the outer radial dynamic pressure generation mechanisms 224 and 224' are larger than the groove volume V225 of the bypass groove 225, a sufficient amount of the static pressure gas G can be discharged between the sliding surfaces 11 and 21 from one of the outer radial dynamic pressure generation mechanisms 224 and 224', and the sealed fluid F flowing between the sliding surfaces 11 and 21 can be suppressed from moving radially inward.

Further, the outer radial dynamic pressure generation mechanisms 224 and 224' are arranged between the inclined portions 225A and 225B of both ends of the bypass groove 225. In other words, the outer radial dynamic pressure generation mechanisms 224 and 224' and the bypass groove 225 are provided at an overlapping position in the radial direction. Accordingly, since a pressure can be generated at an overlapping position in the radial direction, the sliding surfaces 11 and 21 can be more stably separated from each other.

Further, a dynamic pressure is generated in the outer radial dynamic pressure generation mechanism 224 during normal rotation, and a dynamic pressure can be generated in the vicinity of the outer radial dynamic pressure generation mechanism 224' and a leakage side end 225b of the inclined portion 225B on the upstream side in the reverse rotation direction of the bypass groove 225, that is, in the vicinity of the intersection between the inclined portion 225B and the circumferential portion 225C during reverse rotation. That is, the dynamic pressure can be generated regardless of the rotation direction of the rotary seal ring 220.

Furthermore, in this second embodiment, although the embodiment has been exemplified in which the outer radial dynamic pressure generation mechanisms 224 and 224' are arranged between the inclined portions 225A and 225B of both ends of the bypass groove 225, the branch groove may be disposed to be shifted from the bypass groove in the circumferential direction.

Further, in this second embodiment, although the embodiment has been exemplified in which the outer radial dynamic pressure generation mechanisms 224 and 224' are formed by the radial groove 224A and the circumferential groove 224B, for example, a spiral groove or the like having a circumferential component and a radial component may be used. Further, the branch groove may be formed only by the radial groove.

### {Third embodiment}

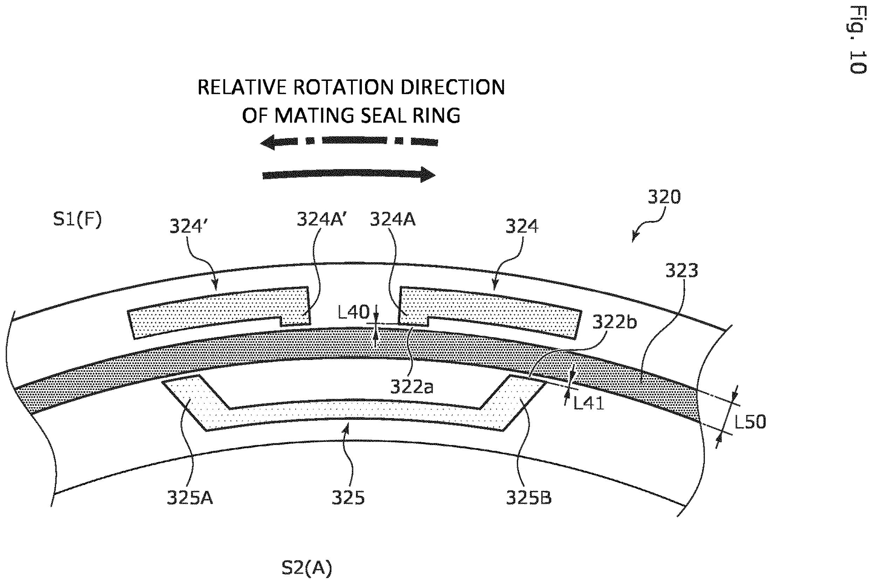

Next, a mechanical seal according to a third embodiment of the present invention will be described with reference to FIG. 10. Furthermore, the description of configurations that are the same as and overlap with the configurations of the second embodiment will be omitted.

As shown in FIG. 10, in a rotary seal ring 320 of this third embodiment, radial grooves 324A and 324A' of outer radial dynamic pressure generation mechanisms 324 and 324' and inclined portions 325A and 325B of both ends of the bypass groove 325 do not communicate with an introduction groove 323. Furthermore, the outer radial dynamic pressure generation mechanisms 324 and 324' of this embodiment are formed to have a constant depth.

Specifically, a radial width L40 of a land 322a that defines the radial groove 324A and the introduction groove 323 is shorter than a radial width L50 of the introduction groove 323 (L40<L50). Furthermore, the radial width L40 may be shorter than the radial width L50, and is preferably 1/5 or less.

Similarly, a radial width L41 of a land 322b that defines the inclined portions 325A and 325B and the introduction groove 323 is shorter than a radial width L50 of the introduction groove 323 (L41<L50). Furthermore, the radial width L41 may be shorter than the radial width L50, and is preferably 1/5 or less.

Accordingly, the static pressure gas G passes over the lands 322a and 322b and is supplied from the introduction groove 423 to the outer radial dynamic pressure generation mechanisms 324 and 324' and the bypass groove 325.

In this way, in the mechanical seal of the present invention, the branch groove and the bypass groove each having both ends connected to the introduction groove are sufficient if the static pressure gas is movable between the introduction groove, the branch groove, and the bypass groove, and the branch groove and the bypass groove may not communicate with the introduction groove as in this embodiment.

### {Fourth embodiment}

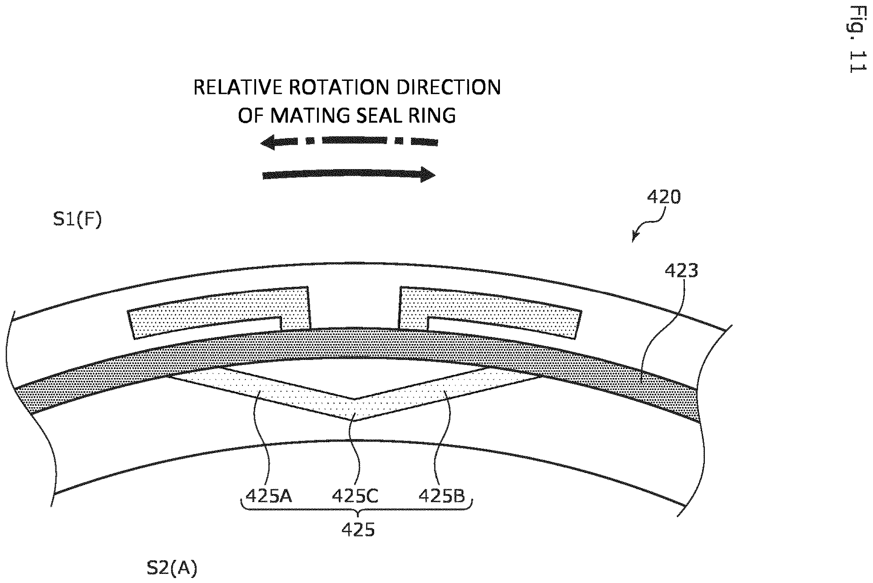

Next, a mechanical seal according to a fourth embodiment of the present invention will be described with reference to FIG. 11. Furthermore, the description of configurations that are the same as and overlap with the configurations of the second embodiment will be omitted.

As shown in FIG. 11, in a rotary seal ring 420 of this fourth embodiment, a bypass groove 425 may have a V-shape as viewed from the axial direction.

Specifically, in the bypass groove 425, inclined portions 425A and 425B extend from a top portion 425C provided at the approximate center in the circumferential direction toward the introduction groove 423 to be away from each other. That is, the bypass groove 425 of this fourth embodiment is not provided with the circumferential portion 251 of the first embodiment.

In this way, in the mechanical seal of the present invention, the barrier fluid may be movable between the introduction groove and the bypass groove, and the shape of the bypass groove may be freely changeable as in this embodiment.

### {Fifth embodiment}

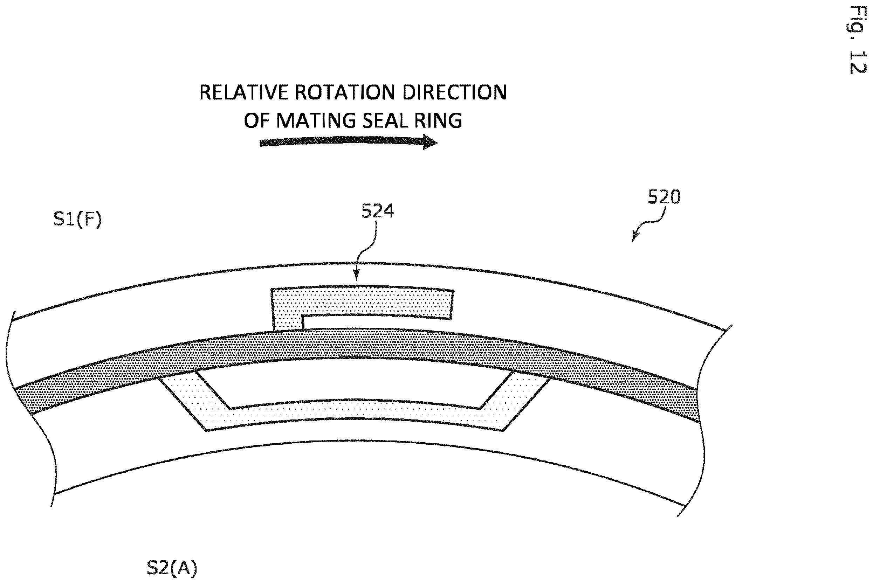

Next, a mechanical seal according to a fifth embodiment of the present invention will be described with reference to FIG. 12. Furthermore, the description of configurations that are the same as and overlap with the configurations of the second embodiment will be omitted.

As shown in FIG. 12, a rotary seal ring 520 of this fifth embodiment is provided with an outer radial dynamic pressure generation mechanism 524, and is not provided with the outer radial dynamic pressure generation mechanism 224' of the second embodiment.

In this way, the mechanical seal of the present invention may correspond only to the normal rotation direction.

### {Sixth embodiment}

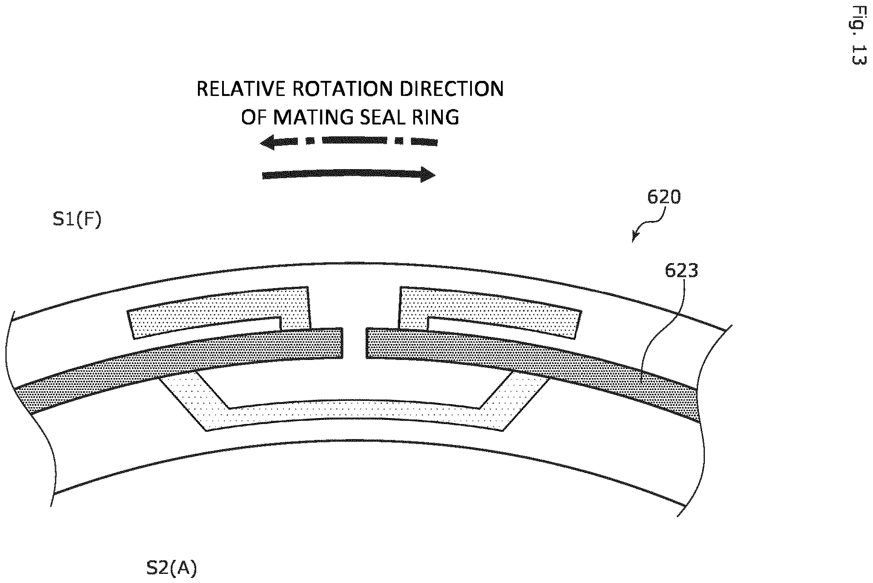

Next, a mechanical seal according to a sixth embodiment of the present invention will be described with reference to FIG. 13. Furthermore, the description of configurations that are the same as and overlap with the configurations of the second embodiment will be omitted.

As shown in FIG. 13, in a rotary seal ring 620 of this sixth embodiment, an introduction groove 623 is divided at one position in the circumferential direction. In this way, the introduction groove 623 is not limited to an annular groove, but may have a substantial C-shape.

Furthermore, the introduction groove is not limited to a C-shape, but may be divided into a plurality of grooves in the circumferential direction, or may have an annular wave shape or an annular angular shape.

### {Seventh embodiment}

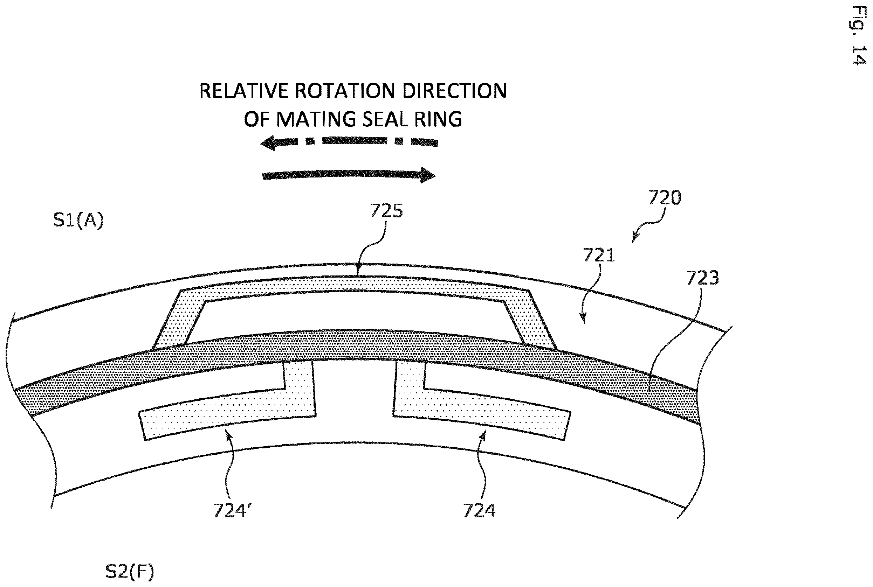

Next, a mechanical seal according to a seventh embodiment of the present invention will be described with reference to FIG. 14. Furthermore, the description of configurations that are the same as and overlap with the configurations of the second embodiment will be omitted.

A mechanical seal that adopts a rotary seal ring 720 of this seventh embodiment is of an outside type in which an atmosphere A communicates with an outer space S1 of a sliding surface 721 and a sealed fluid F is sealed on the side of an inner space S2.

In this seventh embodiment, dynamic pressure generation mechanisms 724 and 724' are arranged on the inner radial side of an introduction groove 723, and a bypass groove 725 is disposed on the outer radial side of the introduction groove 723.

In this way, the mechanical seal of the present invention may be applied to an environment in which the sealed fluid space is located on the inner radial side of the sliding surface and the leakage space is located on the outer radial side of the sliding surface.

Although the embodiments of the present invention have been described above with reference to the drawings, the specific configuration is not limited to these embodiments, and the present invention also includes modifications and additions that do not deviate from the scope of the present invention.

For example, in the above-described first to seventh embodiments, the mechanical seal for industrial machinery has been described as an example, but the present invention may also be applied to other mechanical seals for automobiles and the like.

Further, in the above-described first to seventh embodiments, although it has been described that the sealed fluid is a high-pressure gas, the present invention is not limited thereto. The fluid may be liquid or low-pressure gas, or may be a mist of a mixture of liquid and gas.

Further, in the above-described first to seventh embodiments, although it has been described that the fluid on the leakage space side is atmosphere as a low-pressure gas, the present invention is not limited thereto. If the pressure is lower than that of the sealed fluid, the fluid may be liquid or high-pressure gas, or may be a mist of a mixture of liquid and gas.

Further, in the above-described first to seventh embodiments, although it has been described that the sealed fluid space side is the high pressure side and the leakage space side is the low pressure side, the sealed fluid space side and the leakage space side may have substantially the same pressure.

Further, in the above-described first to seventh embodiments, although the embodiment has been exemplified in which the barrier fluid is supplied between the sliding surfaces from the stationary seal ring side, the barrier fluid may be supplied between the sliding surfaces from the rotary seal ring side. Furthermore, the supply hole and the introduction groove may be formed in the same seal ring.

Further, in the above-described first to seventh embodiments, although the embodiment has been exemplified in which the rotary seal ring is provided with the introduction groove and the bypass groove, the stationary seal ring may be provided with the introduction groove and the bypass groove, the rotary seal ring may be provided with one of the introduction groove and the bypass groove, and the stationary seal ring may be provided with the other of the introduction groove and the bypass groove. Further, the branch groove may be provided in either the stationary seal ring or the rotary seal ring. Further, the branch groove having the dynamic pressure generation portion may have a spiral shape or the like other than the Rayleigh step shape.

In the above-described first to seventh embodiments, although the embodiment has been exemplified in which both ends of the bypass groove are formed by the inclined portions, for example, both ends of the bypass groove may extend from both ends of the circumferential portion in the radial direction and form substantially a right angle with the circumferential portion.

### {REFERENCE SIGNS LIST}

- 9: Static pressure gas supply source
- 10: Stationary seal ring (other seal ring)
- 11: Sliding surface
- 20: Rotary seal ring (one seal ring)
- 21: Sliding surface
- 23: Introduction groove
- 25: Bypass groove
- 224, 224': Outer radial dynamic pressure generation mechanism (branch groove)
- A: Atmosphere
- F: Sealed fluid
- G: Static pressure gas (barrier fluid)
- S1: Outer space (sealed fluid side space)
- S2: Inner space (leakage side space)

## Claims

1. A mechanical seal disposed between a housing and a rotating shaft rotating relative to the housing, comprising a stationary seal ring fixed to a housing side and a rotary seal ring fixed to a rotating shaft side, and defining a sealed fluid space and a leakage space by relative rotation of the stationary seal ring and the rotary seal ring,
wherein at least one sliding surface of the stationary seal ring and the rotary seal ring is provided with a supply hole which supplies a barrier fluid between the sliding surfaces and at least one sliding surface of the stationary seal ring and the rotary seal ring is provided with an introduction groove which is formed to overlap with the supply hole in an axial view and extend in a circumferential direction, and
wherein a bypass groove having both circumferential ends extending toward the introduction groove is formed on a leakage side of the introduction groove.

2. The mechanical seal according to claim 1,
wherein the bypass groove has inclined portions at both ends in the circumferential direction, the inclined portion on an upstream side in relative rotation direction is inclined toward the upstream side in the relative rotation direction toward the introduction groove, and the inclined portion on a downstream side in the relative rotation direction is inclined toward the downstream side in the relative rotation direction toward the introduction groove.

3. The mechanical seal according to claim 2,
wherein a circumferential portion which extends in the circumferential direction is provided between the upstream inclined portion and the downstream inclined portion.

4. The mechanical seal according to any one of claims 1 to 3,
wherein the both ends of the bypass groove communicate with the introduction groove.

5. The mechanical seal according to claim 1,
wherein a branch groove extends from the introduction groove to a sealed fluid side.

6. The mechanical seal according to claim 5,
wherein the branch groove has a dynamic pressure generation portion which extends in a relative rotation direction of the stationary seal ring and the rotary seal ring.

7. The mechanical seal according to claim 5,
wherein the branch groove is disposed between the both ends of the bypass groove.

8. The mechanical seal according to claim 1,
wherein the introduction groove has an endless annular shape.
